# EUROPÄISCHE PATENTSCHRIFT

(11) **EP 3 086 100 B1**
(45) Veröffentlichungstag und Bekanntmachung des Hinweises auf die Patenterteilung: **24.05.2017**
(21) Anmeldenummer: 16164212.9
(22) Anmeldetag: 07.04.2016
(51) Int. Cl.: G01G 21/22, G01G 21/23, G01G 21/28, G01G 23/00, G01G 23/37

(54) **DOPPELSEITIGE WAAGE**
DOUBLESIDED SCALE
BALANCE A DOUBLE FACE

(30) Priorität: 24.04.2015 DE 102015106363
(43) Veröffentlichungstag der Anmeldung: 26.10.2016
(73) Patentinhaber: Leifheit AG, 56377 Nassau (DE)
(72) Erfinder: DENK, Andre, 45481 Mülheim a.d. Ruhr (DE); ROYER, Nina, 56132 Becheln (DE)
(74) Vertreter: Bungartz Christophersen Partnerschaft mbB Patentanwälte

(56) Entgegenhaltungen:
- CN-U- 203 323 855
- DE-A1-102010 033 143
- JP-A- S5 861 418

## Beschreibung

Die Erfindung betrifft eine Waage mit einer Tragplatte, die sich über Wägezellen auf einem Untergrund abstützt und deren Oberseite eine Wägefläche bildet, auf die eine zu wiegende erste Last auflegbar ist, einer Zusatzwägefläche, die sich über Zusatzwägezellen auf einem Untergrund abstützt und auf die eine zu wiegende zweite Last auflegbar ist, mit einer Elektronik, die aus einem von den Wägezellen oder den Zusatzwägezellen gelieferten Messsignal das Gewicht der Last zu bestimmen vermag und mit einer Anzeigevorrichtung zum Anzeigen des von der Elektronik ermittelten Gewichts.

Waagen dieser Art werden von der Firma Bakdo B.V. im Internet unter der URL (http://www.ideascomfort.de/de/kuche/kuchenutensilien/zweiflachige-waage/2635316.html) angeboten. Bei diesen Waagen ist ein Gehäuse vorgesehen, das auf seiner Oberseite die Tragplatte mit der Wägefläche aufweist. Die Tragplatte stützt sich über Standfüsse auf dem Gehäuse ab, wobei die Wägezellen zwischengeschaltet sind und durch das auf der Tragplatte aufliegenden Gewicht ausgelenkt werden.

Die bekannte Waage ist eine Küchenwaage. Der Messbereich von Küchenwagen beträgt üblicherweise zwischen 0 und einigen Kilogramm, bei der oben genannten Waage sind es maximal 5000 g. Grund für diese Einschränkung ist die Empfindlichkeit der Wägezellen, da nur empfindliche Wägezellen eine hinreichend kleine Auflösung bieten. Küchenwaagen haben dabei üblicherweise eine Auflösung von 1-2 g. Je nach Anwendungsfall kann diese Auflösung zu ungenau sein, so dass dann der Wunsch nach einer höheren Auflösung vorliegt. Dies realisiert die bekannte Küchenwaage durch eine zweite Waage, die in einer Schublade im Gehäuse angeordnet ist. Diese zweite Feinwaage weist empfindlicherer Dehnungsmeßstreifen auf, hat dafür jedoch im Gegenzug nur eine geringere maximale Belastbarkeit.

Der Nachteil der bekannten Waage besteht darin, dass zum einen ein Gehäuse vorgesehen sein muss, dass die Schublade aufnimmt. Dies schränkt die Gestaltungsmöglichkeiten der Waage ein. Darüber hinaus ist die Schublade ein mechanisches Bauteil, das gerade in der nicht sauberen Küchenumgebung einer gewissen Verschmutzung ausgesetzt ist und nur vergleichsweise kompliziert bedient werden kann. Ein weiterer Nachteil besteht darin, dass dem Benutzer beide Wegeflächen bei herausgezogener Schublade präsentiert werden, so dass er den Feinwiegebereich möglicherweise gar nicht benutzt, sondern unwissentlich das kleine Gewicht mit der großen Wiegefläche abwiegt. Schließlich kann eine irrtümlich noch herausragende Schublade mit der empfindlichen Wiegeeinheit durch eine zu hohe Belastung überlastet und damit beschädigt werden.

Aus der CN 2 03 323 855 U ist eine Waage mit zwei Tragplatten als Wiegeflächen auf der Oberseite bekannt. Die beiden Tragplatten sind über Meßwertaufnehmer gelagert, die unterschiedliche Messbereiche und Messgenauigkeiten aufweisen. Eine ähnliche Ausgestaltung ist aus der JP S58-61 418 A bekannt. Beide Waagen können zwar den unterschiedlichen Anforderungen verschiedener Wägeaufgaben Rechnung tragen, haben aber den Nachteil, dass sie wegen der nebeneinander angeordneten Wägeflächen vergleichsweise viel Platz brauchen. Ferner ist die Gestaltungsfreiheit des Gehäuses eingeschränkt, da die beiden Tragplatten der Wiegeeinheiten jeweils im Gehäuse über Wägezellen abgestützt werden müssen. Die aus der JP S58-61 418 A bekannte Waage hat dabei den weiteren Nachteil, dass die Wiegeeinheiten in unterschiedlichen Gehäusen vorgesehen sind, so dass das Aufstellen und Lagern der Waage vergleichsweise aufwändig ist.

Aus der DE 10 2010 033 143 A1 ist eine Waage bekannt, bei der zwei Kraftaufnehmer in Reihe geschaltet sind. Diese Waage hat zwar den Vorteil, dass über die beiden Kraftmesser unterschiedliche Nennlasten und damit unterschiedliche Messbereiche und Messgenauigkeiten gewogen werden können, jedoch ist die Reihenschaltung hinsichtlich der Eindeutigkeit der Wiegefunktion und der Bahuhöhe nachteilig.

Aufgabe der Erfindung ist es daher, eine Waage zu schaffen, die über zwei Wiegefunktionen verfügt, aber kostengünstig herstellbar und leicht zu bedienen ist.

Diese Aufgabe wird nach der Erfindung dadurch gelöst, dass die Zusatzwägefläche unterhalb der Wägefläche angeordnet ist und zum Wiegen des auf der Zusatzwägefläche aufliegenden Gewichts in Richtung der Wägefläche belastbar ist, wobei die Anzeigevorrichtung derart ausgebildet ist, dass sie in einem ersten Wiegemodus, in dem die Wägefläche nach oben orientiert ist, und einem zweiten Wiegemodus, in dem die Zusatzwägefläche nach oben orientiert ist, ablesbar ist.

Durch die erfindungsgemäße Ausgestaltung der Waage kann nun zwischen den beiden Wiegefunktionen ganz einfach hin und her gewechselt werden. An der Unterseite der Waage ist die Zusatzwägefläche angeordnet. Dies bedeutet, dass die Waage einfach um 180° gewendet wird, um die jeweils andere Wiegevorrichtung benutzen zu können.

Die erfindungsgemäßen Waagen können jede Funktion aufweisen. Die Erfindung ist nicht auf die Anwendung als Küchenwaage beschränkt. Auch ist die Erfindung nicht darauf beschränkt, dass die Auflösung und der Messbereich der beiden, in der neuen Waage kombinierten Wiegevorrichtungen unterschiedlich sind.

Im Folgenden wird die Erfindung anhand einer Küchenwaage mit Zusatzwiegefunktion beschrieben. In gleicher Weise lassen sich aber auch Personenwaagen, Briefwaagen oder sonstige Waagen mit der zweiten Funktion ergänzen.

Die Waage weist unterhalb der Tragplatte, deren Oberfläche die Wägefläche für die Hauptwaage bildet, eine zweite Zusatzwägefläche auf. Dabei ist die Waage so konstruiert, dass die Zusatzwägefläche nach Drehen der Waage um 180° benutzt werden kann. Dies bedeutet, dass die Zusatzwägefläche beim Wiegen in die zur Bewegungsrichtung der Wägefläche der Hauptwaage entgegengesetzte Richtung bewegt wird. Wird die Hauptwaage verwendet, hängt die Zusatzwägefläche inaktiv an der Unterseite der Waage.

Während des Betriebes der Hauptwaage wird bevorzugt kein Kontakt zwischen der Zusatzwägefläche und dem die Stellfläche für die Hauptwaage bildenden Untergrund vorliegen. Ansonsten wird ein Kraftschluss erzeugt werden, der das Messergebnis der Hauptwaage verfälscht. Schlimmstenfalls könnten auch die Zusatzwägezellen beschädigt werden, wenn sich das Gewicht, der auf der Wägefläche aufliegenden Last vollständig auf die Zusatzwägezellen übertragen würde. Dies bedeutet, dass aufgrund des fehlenden Kontaktes der Zusatzwägefläche mit der Stellfläche die Hauptwaage in dieser Orientierung wie eine übliche Waage verwendet werden kann. Die Anzeigevorrichtung zeigt das Gewicht der auf der Wägefläche liegenden Last wie bei jeder anderen Waage auch an.

Die Anzeigevorrichtung kann unterhalb der Wägefläche vorgesehen sein, sodass der Benutzer den Gewichtswert durch die Wägefläche hindurch ablesen kann, die in diesem Bereich dann als Sichtfenster ausgebildet ist. Alternativ kann die Anzeigevorrichtung auch am Rand der Wägefläche vorgesehen sein.

Grundsätzlich sind derzeit zwei grundsätzlich unterschiedliche Ausgestaltungen von Waagen üblich: Küchenwagen weisen meist ein Gehäuse auf, auf dessen Oberseite die Wägefläche vorgesehen ist. Dabei können die Wägezellen zwischen der Tragplatte mit der Wägefläche und dem Gehäuse vorgesehen sein, alternativ kann sich das Gehäuse über Standfüsse auf der Stellfläche abstützen, wobei die Wägezellen dann auch zwischen den Standfüssen und dem Gehäuse vorgesehen sein können.

Badezimmerwagen dagegen weisen häufig auch eine Ausgestaltung ohne separates Gehäuse auf, hier ist dann die Elektronik eine Tragplatte vorgesehen und über elektrische Verbindungen mit den Wägezellen und der ebenfalls an der Tragplatte angeordneten Anzeigevorrichtung verbunden. Die Wägezellen wiederum sind bei dieser Ausgestaltung in Standfüsse integriert, deren oberer Bereich an den Ecken mit der Tragplatte verbunden ist.

Die erfindungsgemäße Ausgestaltung mit unterhalb der Tragplatte angeordneter zweiter Zusatzwägefläche lässt in Verbindung mit beiden Ausgestaltungen umsetzen. Bei der erstgenannten Ausgestaltung kann das Gehäuse entweder Standfüsse aufweisen, die hoch genug sind, um der Zusatzwägefläche ausreichend Raum auf der Unterseite des Gehäuses einzuräumen.

Alternativ kann das Gehäuse auch eine taschenartige Einsenkung aufweisen, innerhalb derer die Zusatzwägefläche angeordnet ist. In jedem Fall können neben der Zusatzwägefläche nach unten hervorspringende Distanzhalter vorgesehen sein, die vor einem Kontakt der Zusatzwägefläche mit dem Untergrund auf dem Untergrund aufsetzen und so die empfindlichen Zusatzwägezellen schützen. Die taschenartige Ausnehmung kann auch über einen Schiebeverschluss oder eine Klappe verschlossen werden.

Schließlich könnte das Gehäuse auch nach oben, seitlich an der Tragplatte mit der Wägefläche vorbeigeführte Tragelemente aufweisen, die noch oben abstehen und bei gedrehter Waage als Standfüsse agieren, in die dann die Zusatzwägezellen integriert sind. Dann würde funktional die zweite Waage auf gleiche Weise arbeiten und aufgebaut sein wie die erste Waage. Dies hätte allerdings den Nachteil, dass die Abmessungen der Last, die mit der Wägefläche der Hauptwaage gewogen werden soll, begrenzt ist, da diese ja nicht auch diesen Tragelementen aufliegen darf.

Bei der Ausgestaltung der Waage ohne Gehäuse, die auch als Küchenwaage konzeptioniert sein kann, kann dann die Zusatzwägefläche unmittelbar über Distanzstücke von an der Unterseite der die Wägefläche der Hauptwaage tragenden Tragplatte angeordnet sein. Diese Distanzstücke sind dann zweiteilig ausgebildet und jeweils mit der Zusatzwägezelle verbunden. Dies bedeutet, dass bei umgekehrter Waage die Wägefläche auf dem Untergrund aufliegt. Die Rückseite der die Wägefläche tragenden Tragplatte bildet dann funktionell die Standfläche für die zusätzliche Waage. Die Wägezellen der Hauptwaage stehen in diesem Fall nach oben ab und werden durch ein Gewicht, das auf die Zusatzwägefläche aufgelegt wird, nicht belastet, da diese kleiner ist als der Abstand der Wägezellen der Hauptwaage voneinander.

Die Anzeigevorrichtung ist erfindungsgemäß so ausgebildet, dass sie auch bei gewendeter Waage ablesbar ist. Dies kann auf verschiedene Weise erfolgen. Zum einen kann an der Tragplatte die Anzeigevorrichtung angeordnet sein, die bei nach oben orientierter Wägefläche durch ein Sichtfenster in der Tragplatte ablesbar ist. Diese Anzeigevorrichtung kann ein zweites Display aufweisen, das von unten ablesbar ist und abgelesen wird, wenn die Zusatzfunktion beim Wiegen über die Zusatzwägefläche mit gewendeter Waage genutzt wird.

Alternativ kann auch ein gemeinsames Display genutzt werden, das mit einer Anzeige von beiden Seiten abgelesen werden kann. Damit bei gewendeter Waage die Anzeige nicht spiegelverkehrt erscheint, kann ein Orientierungssensor vorgesehen sein, der der Elektronik anzeigt, ob die Zusatzwägefläche die Wägefläche nach oben gerichtet ist, so dass die Anzeige hieran angepasst wird.

Der Orientierungssensor kann ferner von der Elektronik auch genutzt werden, um selektiv das Messsignal der Wägezellen oder der Zusatzwägezellen abzufragen. Hierüber kann Energie gespart werden, so dass sich die Stand-by Zeit der Waage vergrößern lässt. Weiterhin kann über den Orientierungssensor, dann ohne Abschalten der Wägezellen, von einem Wiegemodus in einen Fehlerkorrekturmodus umgeschaltet werden. Empfängt die Elektronik von den nach oben abstehenden Wägezellen ein Signal, wird dies dahingehend interpretiert, dass die Last auf der Zusatzwägefläche auch auf diesen Wägezellen aufliegt, so dass eine Fehlmessung zu erwarten ist. In diesem Fall wird dann in der Anzeigevorrichtung kein Messergebnis, sondern eine Fehlermeldung angezeigt.

Die Ablesbarkeit der Anzeigevorrichtung bei gewendeter Waage kann schließlich auch über eine drehbare Anzeigevorrichtung realisiert werden, die entweder an der Tragplatte oder an einem Gehäuse, sofern dieses vorhanden ist, drehbar befestigt ist.

Eine weitere Möglichkeit besteht natürlich darin, dass die Anzeigevorrichtung als von den übrigen Teilen der Waage separates Bauteil ausgebildet ist, das die notwendigen Informationen zum Anzeigen des Gerichtswertes per Funk oder eine sonstige drahtlose Datenübertragungsverbindung von der Waage erhält.

Die Energieversorgung der Waage erfolgt bevorzugt über Batterien oder einen Akkumulator. In beiden Fällen kann die Energieversorgung für beide Wiegefunktionen genutzt werden. Sind mehrere Displays vorhanden, kann die Energieversorgung auch beide Displays mit Strom versorgen. Alternativ kann natürlich auch eine zweite Energieversorgung vorgesehen sein, so dass im Prinzip zwei voneinander unabhängige Waagen vorliegen, wobei die kleinere Waage an der Unterseite der größeren Waage befestigt ist.

Der Messbereich der als Küchenwaage ausgebildeten Hauptwaage kann beispielsweise zwischen 0 und 10000 g liegen, wobei die Auflösung eines bevorzugten Ausführungsbeispiels bei 1 g liegt. Die darunter angeordnete, um 180° gedrehte Feinwaage kann dann einen Messbereich zwischen 0 und 500 g aufweisen, die Auflösung beträgt hier 0,1 g. Dieses Beispiel verdeutlicht, dass die erfindungsgemäße Waage auch Kombinationen von Verwendungen erlaubt, so kann zum Beispiel die Hauptwaage als Küchenwaage Verwendung finden, während die darunterliegende, feinere Waage als Arzneimittel oder Gewürzwaage, Briefwaage oder sonstige Waage eingesetzt werden kann.

Ein weiterer Anwendungsfall für die erfindungsgemäße Waage kann auch eine Personenwaage sein. Hier kann zumal die Hauptwaage zum Wiegen von schwergewichtigen Personen eingesetzt werden, während die darunterliegende, höher auflösende Zusatzwaage für Kinder, Säuglinge oder auch nur leichtgewichtige Personen verwendet werden kann. So kann eine Personenwaage geschaffen werden, die auch für adipöse Menschen verwendet werden kann, ohne dass die übrigen Haushaltsmitglieder auf die höhere Auflösung verzichten müssten.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: eine erfindungsgemäße Waage in schematischer Ansicht,
- Fig. 2: die in Figur 1 dargestellte, umgedrehte Waage
- Fig. 3: eine weitere Ausgestaltung einer erfindungsgemäßen Waage,
- Fig. 4: eine dritte Ausgestaltung einer erfindungsgemäßen Waage und
- Fig. 5: eine vierte Ausgestaltung einer erfindungsgemäßen Waage.

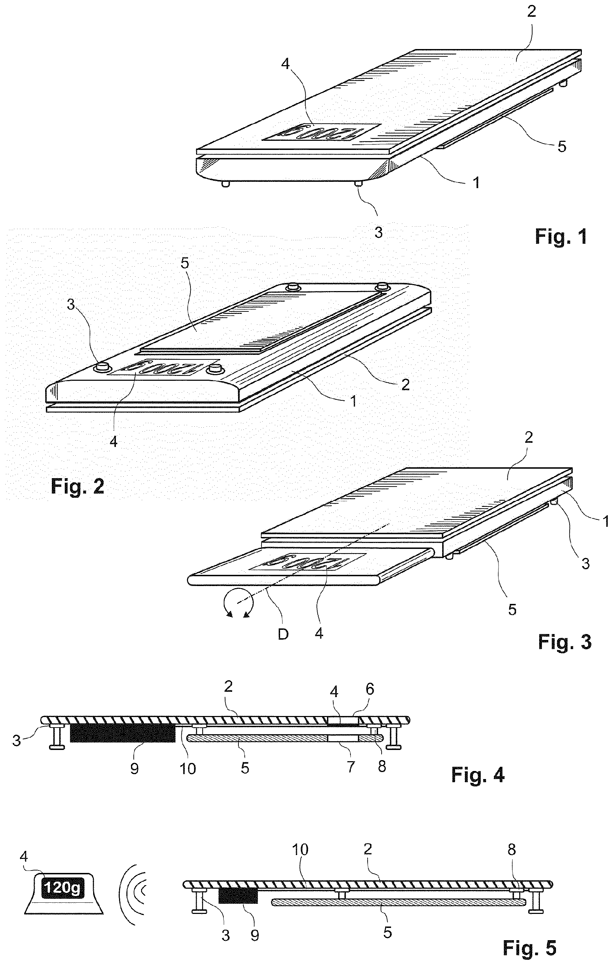

In Figur 1 ist eine mögliche Ausgestaltung der erfindungsgemäßen Waage anhand einer Küchenwaage dargestellt. Die Waage weist ein Gehäuse 1 auf, auf deren Oberseite eine Tragplatte mit einer Wägefläche 2 angeordnet ist. Integriert in die Wägefläche 2 ist ein Sichtfenster, durch das ein Display 4 einer Anzeigevorrichtung 4 ablesbar ist.

Unterhalb des Gehäuses 1 ist die Zusatzwägefläche 5 dargestellt. Diese Zusatzwägefläche 5 ist, wie die Wägefläche 2, am Gehäuse 1 angeordnet und stützt sich über hier nicht dargestellte Zusatzwägezellen 8 auf dem Gehäuse 1 ab, wenn das Gehäuse 1 um 180° gedreht wird. Die Tragplatte mit der Wägefläche 2 wiederum stützt sich über Wägezellen 3 ab, wobei im gezeigten Ausführungsbeispiel die Tragplatte fest mit dem Gehäuse 1 verbunden ist und die Wägezellen 3 in kleinen Standfüssen angeordnet sind, über die das Gehäuse 1 auf einer Standfläche aufsteht. Die Standfüsse haben den zulässigen Vorteil, dass sie die Ebene der Zusatzwägefläche 5 soweit überragen, dass sie gleichzeitig verhindern, dass im Falle der in Figur 1 dargestellten Orientierung der Waage dessen maximaler Belastung die Zusatzwägefläche 5 mit der Standfläche in Kontakt kommen.

Figur 2 zeigt die in Figur 1 dargestellte Ausgestaltung der Waage in einer um 180° gedrehten Stellung. Zu erkennen ist, dass nun die Tragplatte mit der Wägefläche 2 auf der Standfläche aufliegt. Die Standfüße mit den Wägezellen 3 ragen nun im Wesentlichen vertikal nach oben und sind hinsichtlich der Wiegefunktion funktionslos. Nun ist die aktive Fläche die Zusatzwägefläche 5. Die Anzeigevorrichtung 4 ist hier von beiden Seiten aus sichtbar, wobei die Waage über ein Orientierungsschalter die Anzeige so umzuschalten vermag, dass sie nicht spiegelverkehrt erscheint sondern vom Benutzer abgelesen werden kann.

Zu erkennen ist in Figur 2 insbesondere Tatsache, dass die Zusatzwägefläche 5 kleiner als die Wägefläche 2 ist. Die Standfüsse, die die Wägezellen 3 aufnehmen, überragen die Zusatzwägefläche 5, sind aber weit genug von ihr entfernt, so dass auch etwas größere Lasten auf die Zusatzwägefläche 5 aufgelegt werden können.

Figur 3 zeigt eine andere Ausgestaltung der Waage. Die Wägefläche 2, das Gehäuse 1 und die Zusatzwägefläche 5 sind hier ähnlich aufgebaut wie bei der in den Figuren 1 und 2 dargestellten Ausführungsform. Allerdings ist hier die Anzeigevorrichtung 4 um die Drehachse D drehbar am vorderen Bereich des Gehäuses 1 vorgesehen.

In den Figuren 4 und 5 sind mögliche Ausgestaltungen der Erfindung schematisch dargestellt. Figur 4 verdeutlicht den grundsätzlichen Aufbau einer dritten Ausgestaltung einer erfindungsgemäßen Waage. Bei dieser Ausgestaltung ist kein Gehäuse 1 vorgesehen. Vielmehr stützt sich die Tragplatte mit der Wägefläche 2 unmittelbar über Standfüsse, in die die Wägezellen 3 integriert sind, auf der Standfläche ab. Diese Ausgestaltung wird besonders häufig in Verbindung mit Personenwagen verwendet.

Das Display 4 der Anzeigevorrichtung ist unterhalb der Tragplatte vorgesehen. Die Tragplatte mit der Wägefläche 2 weist hierzu an dieser Stelle ein erstes Sichtfenster 6 auf. Durch dieses Sichtfenster 6 kann der Benutzer den von der Anzeigevorrichtung 4 angezeigten Gewichtswert ablesen. Die Elektronik 9 ist in einem Gehäuse untergebracht, das unmittelbar an der Unterseite der Tragplatte angeordnet ist. Die Elektronik 9 ist über elektrische Verbindungen 10 mit den Wägezellen 2, den Zusatzwägezellen 8 und einer hier nicht dargestellten Energieversorgung verbunden. Diese Energieversorgung kann natürlich auch in die Elektronik 9 integriert sein. Die elektrischen Verbindungen 10 verlaufen unter der Tragplatte in Form von elektrischen Leitungen in kleinen, an die Tragplatte geklebten Kanälen.

Erfindungsgemäß ist nun unter der Tragplatte eine zweite Waage befestigt. Diese zweite Waage besteht aus einer Zusatzwägefläche 5, die an Standfüssen befestigt ist, die hier nach oben ragen und an denen die Zusatzwägefläche 5 hängend befestigt ist. In diese Standfüsse sind Zusatzwägezellen 8 integriert. Die Zusatzwägezellen 8 weisen einen kleineren Messbereich als die Wägezellen 2 auf und besitzen eine höhere Auflösung.

Zur Benutzung der zweiten Wiegefunktion dreht der Benutzer die Waage wie oben beschrieben. Der ermittelte Gewichtswert kann dann durch das zweite Sichtfenster 7 abgelesen werden. Natürlich ist die hier dargestellte Ausführung nur als Beispiel zu verstehen. Die Anzeigevorrichtung 4 kann auch außerhalb des von der Zusatzwägefläche 5 abgedeckten Bereichs vorgesehen sein, wenn die Wägefläche 2 groß genug ist. In diesem Fall kann dann natürlich auf das zweite Sichtfenster 7 verzichtet werden.

Figur 4 schließlich zeigt eine vierte Ausgestaltung einer erfindungsgemäßen Waage, die sich von den vorangegangenen Ausgestaltungen dadurch unterscheidet, dass die Anzeigevorrichtung 4 als separates Bauteil ausgebildet ist, das über drahtlose Verbindung mit der Elektronik 9 zu kommunizieren vermag. In diesem Fall kann der Benutzer unabhängig von der Orientierung der Waage in bewährter Weise die Anzeige ablesen.

Das Wenden der Waage erfolgt bei den hier beschriebenen Ausführungsbeispielen durch den Benutzer selbst. Hierzu ist die Waage einfach umzudrehen. Selbst verständlich kann die Waage auch einem zentralen Halter angeordnet sein, an dem sie schwenk- oder drehbar gelagert ist. Dieser Halter kann auch als Wandmontagevorrichtung ausgebildet sein, so dass die Waage zum Beispiel rechtwinklig von einer Wand hervor steht und drehbar am Halter gelagert ist. Hierzu ist bevorzugt die Waage mit einem Gehäuse 1 versehen, so wie es in Ausführungsbeispiel nach den Figuren 1-3 der Fall ist. In diesem Fall kann das Gehäuse 1 über eine Drehverbindung mit dem Wandhalter verbunden sein.

Im Falle der in Figur 3 dargestellten Ausgestaltung kann der Wandhalter auch gleichzeitig die Anzeigevorrichtung 4 aufweisen. Dies bedeutet, dass die Anzeigevorrichtung 4 unmittelbar an der Wand befestigt wird. Damit sie besser abgelesen werden kann ist hier bevorzugt das Displayanzeigevorrichtung 4 schräg gestellt und dem Benutzer zugewandt.

### Bezugszeichenliste:

- 1: Gehäuse
- 2: Wägefläche
- 3: Wägezelle
- 4: Anzeigevorrichtung
- 5: Zusatzwägefläche
- 6: Erstes Sichtfenster
- 7: Zweites Sichtfenster
- 8: Zusatzwägezelle
- 9: Elektronik
- 10: Elektrische Verbindung
- D: Drehachse

## Patentansprüche

1. Waage mit
• einer Tragplatte, die über Wägezellen (3) auf einem Untergrund abstützbar ist und deren Oberseite eine Wägefläche (2) bildet, auf die eine zu wiegende erste Last auflegbar ist,
• einer Zusatzwägefläche (5), die über Zusatzwägezellen (8) auf einem Untergrund abstützbar ist und auf die eine zu wiegende zweite Last auflegbar ist,
• einer Elektronik (9), die aus einem von den Wägezellen (3) oder den Zusatzwägezellen (8) gelieferten Messsignal das Gewicht der Last zu bestimmen vermag und mit
• einer Anzeigevorrichtung (4) zum Anzeigen des von der Elektronik (9) ermittelten Gewichts,
**dadurch gekennzeichnet, dass**
die Zusatzwägefläche (5) unterhalb der Wägefläche (2) angeordnet ist und zum Wiegen des auf der Zusatzwägefläche (5) aufliegenden Gewichts in Richtung der Wägefläche (2) belastbar ist, wobei die Anzeigevorrichtung (4) derart ausgebildet ist, dass sie in einem ersten Wiegemodus, in dem die Wägefläche (2) nach oben orientiert ist, und einem zweiten Wiegemodus, in dem die Zusatzwägefläche (5) nach oben orientiert ist, ablesbar ist.

2. Waage nach Anspruch 1, **dadurch gekennzeichnet, dass** sich über die Ebene der Zusatzwägefläche (5) hinaus nach unten erstreckende Distanzhalter vorgesehen sind, über die die Waage auf einer Standfläche derart aufstellbar ist, dass die Wägefläche (2) nach oben orientiert ist und die Zusatzwägefläche (5) oberhalb der Standfläche und ohne mit dieser in Kontakt zu kommen angeordnet ist.

3. Waage nach einem der Ansprüche 1 oder 2, **dadurch gekennzeichnet, dass** die Waage ein Gehäuse (1) aufweist, wobei die Wägefläche (2) an einer Oberseite des Gehäuses (1) und die Zusatzwägefläche (5) an einer Unterseite des Gehäuses (1) angeordnet sind und sich die Wägezellen (3) über an der Unterseite des Gehäuses (1) vorgesehene Standfüsse auf der Standfläche abstützen.

4. Waage nach dem vorhergehenden Anspruch, **dadurch gekennzeichnet, dass** das Gehäuse (1) zur Bildung der Distanzhalter an seiner Unterseite eine taschenartige Vertiefung aufweist, in der die Zusatzwägefläche (5) angeordnet ist.

5. Waage nach Anspruch 1, **dadurch gekennzeichnet, dass** die Elektronik (1) an der Wägefläche (2) angeordnet und über elektrische Verbindungen (10) mit den Wägezellen (3) verbunden ist, wobei sich die Wägezellen (3) über an der Wägefläche (2) angeordnete Standfüsse auf der Standfläche abstützen und die Zusatzwägefläche (5) an der Unterseite der Wägefläche (2) angeordnet ist und sich über zusätzliche, die Zusatzwägezellen (8) beinhaltende Standfüsse nach Umdrehen der Waage auf der Wägefläche (2) abstützt.

6. Waage nach einem der Ansprüche 3 oder 5, **dadurch gekennzeichnet, dass** die Distanzhalter von den Standfüssen gebildet sind.

7. Waage nach einem der vorhergehenden Ansprüche, **dadurch gekennzeichnet, dass** die Anzeigevorrichtung (4) drehbar an der Waage angeordnet ist.

8. Waage nach einem der vorhergehenden Ansprüche, **dadurch gekennzeichnet, dass** die Anzeigevorrichtung (4) als Doppelanzeige mit zwei Anzeigebereichen ausgebildet ist, wobei ein erster Anzeigebereich von oben und ein zweiter Anzeigebereich von unten ablesbar ist.

9. Waage nach einem der vorhergehenden Ansprüche, **dadurch gekennzeichnet, dass** sie einen Orientierungssensor aufweist, der derart ausgebildet ist, dass die Elektronik (9) eine Orientierung der Waage mit nach oben angeordneter Wägefläche (2) oder mit nach oben angeordneter Zusatzwägefläche (5) zu detektieren vermag.

10. Waage nach dem vorhergehenden Anspruch, **dadurch gekennzeichnet, dass** die Elektronik (9) derart ausgebildet ist, dass sie bei nach oben angeordneter Wägefläche (2) nur das Signal der Wägezellen (3) und bei nach oben angeordneter Zusatzwägefläche (5) nur das Signal der Zusatzwägezellen (8) abfragt.

11. Waage nach einem der vorhergehenden Ansprüche, **dadurch gekennzeichnet, dass** die Anzeigevorrichtung (4) derart ausgebildet ist, dass sie von der Oberseite und der Unterseite aus ablesbar ist.

12. Waage nach einem der vorhergehenden Ansprüche, **dadurch gekennzeichnet, dass** die Elektronik (9) von einer ersten Teilelektronik und einer zweiten Teilelektronik gebildet ist, wobei die erste Teilelektronik an der Wägefläche (2) angeordnet ist und das Signal der Wägezellen (3) abzufragen vermag und die zweite Teilelektronik an der Zusatzwägefläche (5) angeordnet ist und das Signal der Zusatzwägezellen (8) abzufragen vermag.

13. Waage nach dem vorhergehenden Anspruch, **dadurch gekennzeichnet, dass** die die erste Teilelektronik und die zweite Teilelektronik von einer gemeinsamen Stromversorgung gespeist sind.

14. Waage nach einem der vorhergehenden Ansprüche, **dadurch gekennzeichnet, dass** die Wägezellen (3) derart ausgebildet sind, dass die von der Wiegefläche (2) bereitgestellte Wiegefunktion einen Messbereich zwischen 0 und 10000g mit einer Auflösung von 1g und die von den Zusatzwiegeflächen bereitgestellte Wiegefunktion einen Messbereich von 0 bis 500g mit einer Auflösung von 0,1g aufweisen.

## Claims

1. Scale with
• a support plate which is supported on a substrate by means of load cells (3)
and whose upper side forms a weighing surface (2) on which a first load to be weighed can be placed,
• an additional weighing surface (5) which is supported on a substrate by means of additional load cells (8)
and on which a second load to be weighed can be placed,
• electronics (9) which are able to determine the weight of the load from a measuring signal supplied by the load cells (3) or by the additional load cells (8), and with
• a display device (4) to display the weight determined by the electronics (9),
**characterised in that**
the additional weighing surface (5) is arranged underneath the weighing surface (2) and to which a load can be applied towards the weighing surface (2) to weigh the load placed on the additional weighing surface (5), wherein the display device (4) is formed such that it can be read in a first weighing mode, in which the weighing surface (2) is orientated upwards, and in a second weighing mode, in which the additional weighing surface (5) is orientated upwards.

2. Scale in accordance with claim 1, **characterised in that** spacers are provided extending downwards beyond the plane of the additional weighing surface (5), wherein said spacers enable the scale to be placed on a standing surface such that the weighing surface (2) is orientated upwards and the additional weighing surface (5) is arranged above the standing surface without coming into contact with said surface.

3. Scale in accordance with either one of claims 1 or 2, **characterised in that** the scale has a housing (1), wherein the weighing surface (2) is arranged on an upper side of the housing (1) and the additional weighing surface (5) is arranged on an underside of the housing (1) and the load cells (3) are supported on the standing surface by standing feet provided on the underside of the housing (1).

4. Scale in accordance with the preceding claim, **characterised in that** the housing (1) has a pocket-type recess to form the spacer on its underside, in which recess the additional weighing surface (5) is arranged.

5. Scale in accordance with claim 1, **characterised in that** the electronics (1) are arranged on the weighing surface (2) and are connected to the load cells (3) by means of electrical connections (10), wherein the load cells (3) are supported on the standing surface by standing feet arranged on the weighing surface (2) and the additional weighing surface (5) is arranged on the underside of the weighing surface (2) and is supported by additional standing feet containing the additional load cells (8) after rotating the scale on to the weighing surface (2).

6. Scale according to any one of the claims 3 or 5, **characterised in that** the spacers are formed by the standing feet.

7. Scale according to any one of the preceding claims, **characterised in that** the display device (4) is arranged so that it can be pivoted on the scale.

8. Scale according to any one of the preceding claims, **characterised in that** the display device (4) is designed as a double display with two display areas wherein a first display area can be read from above and a second display area can be read from below.

9. Scale according to any one of the preceding claims, **characterised in that** it has an orientating sensor which is designed so that the electronics (9) are able to detect the orientation of the scale with its weighing surface (2) arranged upwards or with its additional weighing surface (5) arranged upwards.

10. Scale according to the preceding claim, **characterised in that** the electronics (9) are designed such that, when the weighing surface (2) is arranged upwards, they retrieve only the signal from the load cells (3) and, when the additional weighing surface (5) is arranged upwards, they retrieve only the signal from the additional load cells (8).

11. Scale according to any one of the preceding claims, **characterised in that** the display device (4) is designed such that it can be read from the upper side and from the lower side.

12. Scale according to any one of the preceding claims, **characterised in that** the electronics (9) are formed by a first electronics part and a second electronics part, wherein the first electronics part is arranged on the weighing surface (2) and is able to retrieve the signal from the load cells (3) and the second electronics part is arranged on the weighing surface (5) and is able to retrieve the signal from the additional load cells (8).

13. Scale according to the preceding claim, **characterised in that** the first electronics part and the second electronics part derive their power from a common power supply.

14. Scale according to any one of the preceding claims, **characterised in that** the load cells (3) are designed such that the weighing function provided by the weighing surface (2) has a measurement range between 0 and 10,000 g with a resolution of 1 g and the weighing function provided by the additional weighing surfaces has a measurement range of 0 to 500 g with a resolution of 0.1 g.

## Revendications

1. Balance avec
• une plaque de support pouvant être supportée sur un substrat par l'intermédiaire de cellules de charge (3) et dont la face supérieure forme une surface de pesée (2) sur laquelle une première charge à peser peut être posée,
• une surface de pesage supplémentaire (5) pouvant être supportée sur un substrat par l'intermédiaire de cellules de charge supplémentaires (8) et sur lesquelles une deuxième charge à peser peut être posée,
• un système électronique (9) capable de déterminer le poids de la charge à partir d'un signal de mesure fourni par les cellules de charge (3) ou les cellules de charge supplémentaires (8) et avec
• un dispositif d'affichage (4) pour afficher le poids déterminé par le système électronique (9),
**caractérisée en ce que**
la surface de charge supplémentaire (5) est disposée sous la surface de pesée (2) et peut être chargée pour peser le poids reposant sur la surface de pesée supplémentaire (5) en direction de la surface de pesée (2), dans laquelle le dispositif d'affichage (4) est conçu de telle sorte qu'il peut être lu dans un premier mode de pesée, dans lequel la surface de pesée (2) est orientée vers le haut et dans un deuxième mode de pesée dans lequel la surface de pesée supplémentaire (5) est orientée vers le haut.

2. Balance selon la revendication 1, **caractérisée en ce qu'**une entretoise s'étendant vers le bas au dessus du niveau de la surface de pesée supplémentaire (5), sur laquelle la balance peut être réglée sur une surface d'appui de telle sorte que la surface de pesée (2) est orientée vers le haut et la surface de pesée supplémentaire (5) est disposée au dessus de la surface d'appui et sans entrer en contact avec celle-ci.

3. Balance selon l'une quelconque des revendications 1 ou 2, **caractérisée en ce que** la balance présente un boîtier (1), dans lequel la surface de pesée (2) est disposée sur une face supérieure du boîtier (1) et la surface de pesée supplémentaire (5) est disposée sur une face inférieure du boîtier (1) et les cellules de charge (3) sont soutenues sur la surface d'appui par le biais de pieds prévus sur la face inférieure du boîtier (1).

4. Balance selon la revendication précédente, **caractérisée en ce que** le boîtier (1) présente un évidement en forme de poche sur sa face inférieure pour former l'entretoise, dans laquelle la surface de pesée supplémentaire (5) est disposée.

5. Balance selon la revendication 1, **caractérisée en ce que** le système électronique (1) est disposé sur la surface de pesée (2) et est connecté aux cellules de charge (3) par l'intermédiaire de connexions électriques (10), dans laquelle les cellules de charge (3) reposent sur la surface d'appui par le biais de pieds disposés sur la surface de pesée (2) et la surface de pesée supplémentaire (5) est disposée sur la face inférieure de la surface de pesée (2) et repose sur la surface de pesée (2) après rotation de la balance par le biais de pieds supplémentaires contenant des cellules de charge supplémentaires (8).

6. Balance selon l'une quelconque des revendications 3 ou 5, **caractérisée en ce que** les entretoises sont formées par les pieds.

7. Balance selon l'une quelconque des revendications précédentes, **caractérisée en ce que** le dispositif d'affichage (4) est disposé en rotation sur la balance.

8. Balance selon l'une quelconque des revendications précédentes, **caractérisée en ce que** le dispositif d'affichage (4) est formé avec deux zones d'affichage sous forme de double affichage, dans laquelle une première zone d'affichage est lisible par le dessus et une deuxième zone d'affichage est lisible par le dessous.

9. Balance selon l'une quelconque des revendications précédentes, **caractérisée en ce qu'**elle présente un capteur d'orientation conçu de telle sorte que le système électronique (9) est capable de détecter une orientation de la balance avec surface de pesée (2) disposée vers le haut ou avec surface de pesée supplémentaire (5) disposée vers le haut.

10. Balance selon l'une quelconque des revendications précédentes, **caractérisée en ce que** le système électronique (9) est conçu de telle sorte qu'il interroge uniquement le signal des cellules de charge (3) pour la surface de pesée (2) disposée vers le haut et qu'elle interroge uniquement le signal des cellules de charge supplémentaires (8) pour la surface de pesée supplémentaire (5) disposée vers le haut.

11. Balance selon l'une quelconque des revendications précédentes **caractérisée en ce que** le dispositif d'affichage (4) est conçu de telle sorte qu'il peut être lu à partir du haut et du bas.

12. Balance selon l'une quelconque des revendications précédentes, **caractérisée en ce que** le système électronique (9) est formé par un premier composant électronique et un deuxième composant électronique, dans laquelle le premier composant électronique est disposé sur la surface de pesée (2) et peut interroger le signal des cellules de charge (3) et le deuxième composant électronique est disposé sur la surface de pesée supplémentaire (5) et peut interroger le signal des cellules de charge supplémentaires (8).

13. Balance selon la revendication précédente, **caractérisée en ce que** le premier composant électronique et le deuxième composant électronique sont alimentés par une alimentation électrique commune.

14. Balance selon l'une quelconque des revendications précédentes, **caractérisée en ce que** les cellules de charge (3) sont conçues de telle sorte que la fonction de pesée fournie par la surface de pesée (2) présente une plage de mesure entre 0 et 10000g avec une résolution de 1g et la fonction de pesée fournie par les surfaces de pesée supplémentaires présente une plage de mesure de 0 à 500g avec une résolution de 0,1g.
